# EUROPEAN PATENT APPLICATION

(11) **EP 3 334 237 A1**
(43) Date of publication of application: **13.06.2018**
(21) Application number: 16202456.6
(22) Date of filing: 06.12.2016
(51) Int. Cl.: H04W 76/02

(54) **METHOD FOR RELIABLE DATA TRANSMISSION**

(71) Applicant: Gemalto M2M GmbH, 81541 Munich (DE)
(72) Inventor: BREUER, Volker, 16727 BOETZOW (DE); ANTONOV, Lavor, 10965 Berlin (DE)
(74) Representative: Grevin, Emmanuel

(57) **Abstract**

The present invention relates to a method for data transmission between a user equipment operating in a cellular network for wireless communication, and a control terminal accessible from the cellular network, wherein the user equipment operates in a communication connection to the control terminal by means of at least a first and a second wireless carrier, with one of the control terminal and the user equipment acting as transmitting apparatus, the other as receiving apparatus, wherein the transmitting apparatus is sending a content record at least as at least a first data packet over the first wireless carrier and as at least a second data packet over the second wireless carrier, the method comprising the steps for the receiving apparatus of:
- attempting to receive the first data packet over the first wireless carrier and the second data packet over the second wireless carrier,
- sending over the first and second wireless carrier each a success indication message to the transmitting apparatus indicating whether at least one of the first and second data packet was successfully received.

## Description

### FIELD OF THE INVENTION

The present invention relates to a method for reliable data transmission between a user equipment and a control terminal.

The invention also pertains to a user equipment using said method. The invention further relates to a control terminal using said method. The invention also relates to a cellular network for data transmission between said user equipment and said control terminal.

### BACKGROUND OF THE INVENTION

In the field of wireless communication the requirement for increasing the reliability of data transmissions is rising. This holds in particular true for machine-to-machine communication, today typically referred to as Internet of Things (IoT). Use cases like remote medical robots or alarm buttons are extremely delay critical and require to be ultra-reliable, such use cases are often summarized under the term URLLC (Ultra-Reliable-Low-Latency connection) traffic.

By now reliability requirements are tried to be solved within the wireless technology standards on lower layers with mechanisms like HARQ and the RLC protocol. However such mechanisms have the drawback of getting reliability for the price of a higher potential delay of successful data transmission. With HARQ the data package is transmitted repeatedly until it is successfully received - or a timeout indicates a bad connection.

For the data transmission between wireless user equipments and central control terminals connected to the cellular networks, e.g. via internet, as it is the typical setup in IoT architectures, this is not sufficient.

On the other hand there is known the concept of a backup connection via another carrier in case of an outage of the first used carrier. This mechanism also does not increase the delay time, when the first carrier fails. Fully parallel transmission typically suffers under synchronization issues, if the one transmission is faster than the other. Therefore such solutions require additional management overhead and are only as fast as the selected first connection, which might turn out to be effectively slower due to congestion issues.

It is therefore the goal of present invention to overcome the mentioned disadvantages and to propose a solution for an improved reliable and low latency data transmission for wireless communication between a user equipment operating in at least a cellular network and a central control terminal, which is accessible by the cellular network.

Further alternative and advantageous solutions would, accordingly, be desirable in the art.

### SUMMARY OF THE INVENTION

For this it is according to a first aspect of the invention suggested a method for data transmission according to claim 1. It is further suggested according to a second aspect of the invention a user equipment as receiving apparatus according to claim 8. It is further proposed according to a third aspect of the invention a user equipment as transmitting apparatus according to claim 10. It is further suggested according to a fourth aspect of the invention a control terminal according to claim 13. It is further proposed according to a fifth aspect of the invention a cellular network according to claim 15.

According to the first aspect of the invention it is suggested a method for data transmission between a user equipment operating in a cellular network for wireless communication, and a control terminal accessible from the cellular network, wherein the user equipment operates in a communication connection to the control terminal by means of at least a first and a second wireless carrier, with one of the control terminal and the user equipment acting as transmitting apparatus, the other as receiving apparatus, wherein the transmitting apparatus is sending a content record at least as at least a first data packet over the first wireless carrier and as at least a second data packet over the second wireless carrier, the method comprising the steps for the receiving apparatus of:
- attempting to receive the first data packet over the first wireless carrier and the second data packet over the second wireless carrier,
- sending over the first and second wireless carrier each a success indication message to the transmitting apparatus indicating whether at least one of the first and second data packet was successfully received.

The inventive method relates to the field of wireless cellular communication with the goal of providing in particular ultra-reliable communication for a user equipment operating in cellular networks. This is in particular designated for technology standards considering machine-type communication devices, like medical robots or security related equipments.

For that the user equipment is operating in a communication connection with a control terminal via a redundant communication path. Here in particular a first and a second wireless carrier is used for assuring a reliable communication. In case the user equipment supports, even more than two wireless carriers are supposed to be used according to present inventive method.

The user equipment preferably comprises transmitter and receiver circuitry capable of maintaining communication connection in parallel on the at least two wireless carriers.

It is in particular suggested that the at least first and second wireless carriers are established by at least one of:
- two base nodes supporting same technology standard,
- two base nodes supporting two different technology standards, or
- two base nodes from two different cellular network operators.

Depending on which of these advantageous embodiments is used, the user equipment needs to be communicatively coupled to two base nodes, each being part of a cellular network. In the first case it is simply two base nodes of the same technology standard, the two base nodes being part of the same cellular network. This comprises, that two suitable base nodes covering each a cell area are in reach for the user equipment. This is the common redundancy approach.

But the inventive method is applicable to this approach as well as to more sophisticated approaches. As such the two base nodes might support different technology standards. That means the base nodes are part of different radio access networks belonging to the same cellular network. As such this could be a NodeB supporting the 3G resp. UMTS radio access network as well as an eNodeB belonging to a 4G resp. LTE radio access network or beyond. In particular for the designated technology standard 5G resp. New Radio it is foreseen to co-exist with the 4G network. Therefore it is part of this embodiment of the invention that the user equipment is connected to each a 4G and a 5G base node.

Additionally it is foreseen the third option that the user equipment is camping on or finally connected to two base nodes of different cellular network operators. This preferably requires the capability to operate in both cellular networks. This is in particular accomplished by having available subscriptions for both cellular networks, the subscriptions are advantageously stored in a user identification module like a SIM card, a UICC, or a secure chip soldered on resp. being part of the user equipment.

The inventive method is therefore very flexible as it is agnostic to the underlying carrier technology. Preferably a user equipment implementing the inventive method is capable of supporting each of the options.

According to the method the user equipment and the control terminal is operating in a communication connection, wherein both communication endpoints may act either as transmitting apparatus or as receiving apparatus. This qualification is in particular related to a certain data transmission during the communication connection. In other words, while a communication connection is open, the user equipment may act in succession as transmitting apparatus and receiving apparatus. This is in particular the case when the user equipment is sending a message, like an instruction or measurement, to the control terminal and the control terminal is sending a response indicating that the message can be handled or not resp. was correctly received or not. Each message is in the following handled as at least one content record, in particular payload data.

Preferably the content record is transmitted as a higher layer packet, in particular an IP package. It is representing a higher packaging layer than the packaging of the underlying carrier. In particular when different carriers are used the packaging of underlying carriers might even differ between each other. This might in particular mean that the content record on the first carrier's technology is transmitted in one technology related packet, while the same content record is on the second carrier's technology transmitted in more than one technology related packets. Also wireless technology measures for increasing the reliability of the technology, like a HARQ (hybrid automatic repeat request) process are supposed to be active on the underlying carrier level.

The inventive method assumes that the transmitting apparatus and the receiving apparatus are in a communication connection, that is, in connected mode, in particular for the sake of sending a plurality of content records. According to the method the transmitting apparatus sends the same content record at least twice, via the at least two wireless carriers. According to that a first data packet, containing the content record, is transmitted by the transmitting apparatus by means of the first wireless carrier to the receiving apparatus. Further a second data packet, containing the same content record is transmitted by the transmitting apparatus by means of the second wireless carrier to the receiving apparatus. Both data packets are transmitted in parallel, which either means within a short period of time one after another, or - in particular depending on the hardware resources - really practically simultaneously.

In the following the transmitting apparatus is listening for at least a response message from the receiving apparatus, said response comprising a success indication message. Depending on the success indication message the transmitting apparatus decides to continue sending the next content record in a queue of content records to be sent. Otherwise the already sent content record is resend. This process is done for one instance and a user equipment, i.e. receiving and transmitting apparatuses may have several of such processes working in parallel each on different packets, like IP packets. Preferably the content records each are of approximately the same size in bytes / bits, at least not exceeding a maximum size.

The inventive method aims at reducing the need for resending the content record as much as possible. Compared to that, with the known ACK/NACK process (acknowledgement/non-acknowledgement) the reliability of the data transmission is only achieved by serial redundancy, that means data packets are retransmitted until they are successfully received or a time out is reached. This would of course lead to much higher delay times.

For improving this, the receiving apparatus is attempting to receive the first data packet over the first wireless carrier and the second data packet over the second wireless carrier. This method step is carried out in parallel. That means, the receiving apparatus is listening for both wireless carriers and tries to decode transmitted signals on the communication data channels of respective carriers.

In particular for each data packet a check, like with a CRC (cyclic redundancy check) checksum, is carried out in order to assure that the data packet is well received and correctly decoded.

Based on this check the receiving apparatus is sending a success indication message to the transmitting apparatus.

The peculiarity of the inventive method is, that over the first and the second wireless carrier each the success indication message indicating a successful received data packet is transmitted, when the data packet received via at least one wireless carrier is successfully decoded. It does not matter via which of the two wireless carriers the data packet was successfully decoded.

In effect, this can result in that a success indication message indicating a successful retrieved data packet is transmitted over a wireless carrier, where the respective data packet was indeed not successfully retrieved.

For the transmitting apparatus it is therefore suggested as a further embodiment that the method comprises continuing sending a second content record, in case of receiving a success indication message from the receiving apparatus over at least one of the first and second wireless carrier.

The transmission of the first content record is therefore successfully completed for both wireless carriers and the next content record in the queue is preferably handled the same way. If no content record is available in the queue anymore, the connection resp. the context is preferably closed.

When the receiving apparatus can neither decode the data packet retrieved over the first wireless carrier and the second wireless carrier, the success indication message sent over both wireless carriers indicates a not successful retrieved data package.

For the transmitting apparatus it is therefore suggested in a further preferred embodiment of the invention, that the method comprises further the step of resending the content record in case no success indication message was received within a predetermined time window.

This is the only case where a delay of transmission is allowed. This complements to the procedure known for ACK/NACK processes but is here triggered through two data transmissions over two wireless carriers, resulting in a failed transmission in both cases. This is comparably unlikely but nevertheless covered by this embodiment of the inventive method. It is in particular unlikely as the underlying layers of both carriers preferably provide known resend methods, like a HARQ in LTE, and therefore try their best to achieve a data transmission. In effect the inventive method profits from the reliability achievements of both carriers.

The predetermined time window is a time limit preferably defined by the time period starting with transmitting a data packet. When the timer expires before a positive success indication message is retrieved, then the data transmission over both wireless carriers is supposed to have failed.

This inventive method further has the effect that the data transmission over both wireless carriers is always synchronized, even if one of the wireless carriers is slower. This is achieved without remarkable overhead in terms of keeping the synchronization. Further the redundancy for achieving reliability is not earned on the price of higher delay. As every package is transmitted redundantly from the beginning, in the case of good reception over at least one wireless carrier no remarkable reduction in data throughput is achieved.

In a further advantageous embodiment of the invention it is suggested that the step of sending the success indication message is carried out as soon as one of the first and second data packet was successfully received.

With that the receiving apparatus sends already a success indication message over both wireless carriers, in the moment when one successful data packet reception is accomplished. In that moment the receiving apparatus knows that the data packet is received - e.g. over the first wireless carrier - and with waiting for the reception of the second data packet over the e.g. second wireless receiver nothing valuable is added.

Hence as soon as the first data packet is achieved the success indication message is sent to the transmitting apparatus. The transmitting apparatus can then immediately continue operating the next content record in the queue. The data transmission over the other wireless carrier may be ended by flushing buffers, and e.g. cancel the HARQ process.

The mentioned principle is especially applicable and advantageous to the IP layer considering correct arrival of IP packets via the one or other wireless carrier. The underlying technology or segmentation does not matter because the complete reception of the IP packet at the IP layer via one of the two wireless carriers leads to an ACK of said packet.

This embodiment is considerably advantageous as the data transmission is thus as fast as the fastest of the both wireless carriers, and even automatically seamlessly adopts should the data transmission for the next content record be faster over the other wireless carrier than before.

This is obviously advantageous, as a high reliability by maintaining a high data throughput, depending on the underlying wireless carriers, is achieved. As the method is also applicable to future technology standards, all of the improvements of those are possible to take advantage of for this method.

It is assured that the data transmission is not slower than when only one of the wireless carriers would have been used. In effect a massive increase in reliability is achieved without any compromise in terms of data throughput. As such the inventive method is applicable to a wide range of IoT applications no matter if high data rates or a low delay time are necessary.

According to another preferred embodiment it is proposed that the success indication message comprises an information element relating to which of the at least one out of the group of the first wireless carrier and the second wireless carrier caused the sending of the success indication message.

With this embodiment the transmitting apparatus gets an indication about which of the used wireless carriers performs better. With that the transmitting apparatus is in the position to decide, if the other wireless carrier repeatedly did not manage to provide the data packet in reasonable time. Thus the transmitting apparatus, in particular the user equipment, may decide for changing the wireless carrier which is not performing. This is in particular true when both wireless carriers are supporting the same technology standard and thus should both achieve the same data throughput.

Preferably the information element is sent that way that the success indication message transmitted over the one wireless carrier from where the successfully decodable data packet was received has an indication, and the other not. Further it is foreseen to send the success indication message via both wireless carriers and the information element may also indicate that via both wireless carriers the data packets were successfully retrieved.

According to an advantageous embodiment it is further proposed a method comprising for the receiving apparatus the step of sending an information record to the cellular network of at least one of the first or second wireless carrier, the information record comprising an indication indicating at least one of out of the group of:
- if the data packet was retrieved first with the respective wireless carrier, or
- if the data packet was retrieved during the predetermined time window. With this embodiment it is foreseen an indication to the underlying carrier, respectively the cellular network about the real success of the data transmission. For the underlying carrier it is not visible in case a success indication message indicating a successful transmission was returned to the transmitting apparatus, if the underlying carrier did manage to transport the data packet in the predetermined time window or not. This embodiment provides this information record to the cellular network of the respective wireless carrier, and it gives the opportunity to the cellular network to optimize the internal data transmission, in particular the network routing, priority adoption etc.

In case the data packet was not received in the predetermined time window over one wireless carrier, then the information record is provided after the predetermined time window ended.

But also for a wireless carrier, that is, a cellular network resp. a radio access network, where the data transmission was indeed successful this indication is interesting in order to configure its internal data transmission that way that it is maintained to keep the performance as it is.

According to the second aspect of the invention it is proposed a user operating in at least one cellular network for wireless communication comprising a connection to at least one control terminal, the user equipment comprising a transmitting circuitry and a receiving circuitry, and is operating in a communication connection to the control terminal by means of at least a first and a second wireless carrier, when the user equipment is acting as a receiving apparatus the receiving circuitry is configured to attempt to receive from the control terminal a first data packet comprising a content record over the first wireless carrier and a second data packet comprising said content record over the second wireless carrier, and the transmitting circuitry is configured to send over the first and second wireless carrier each a success indication message to the control terminal indicating whether at least one of the first and second data packet was successfully received.

A user equipment according to the second aspect of the invention is in particular a device for wireless communication in a cellular network. This includes on the one hand a mobile handset like a smartphone, but preferably a machine-type communication (MTC) device, for use in the context of the internet of things (IoT). Such a MTC device is in particular controlled by a remote control terminal or another user equipment via wireless communication. Likewise the user equipment may alternatively be used itself to control via wireless communication another user equipment or control terminal resp. device.

Typical use cases are robots, in particular medical robots, security installations etc.

The user equipment comprises at least a transmitting circuitry and receiving circuitry, which fulfill the wireless communication tasks, in particular high frequency (HF) components, baseband processor and an antenna. Preferably the transmitting circuitry and the receiving circuitry are integrated in the same circuitry of the user equipment, typically referred to as transceiver. Preferably the user equipment further comprises processing circuitry for controlling the behavior of the user equipment, including possible user interface, controlling sensor activities and instructing the transceiver to carry out send or receive operations.

Further the user equipment preferably comprises volatile and permanent memory means, at least for storing the computer programs run on the processor for accomplishing the tasks of the user equipment.

The user equipment is capable of operating with at least two wireless carriers, a first and a second, in parallel. This means in particular that the user equipment is camping on at least two base nodes, and operating open data connections in parallel over both wireless carriers.

The user equipment of this aspect of the invention is operating as receiving apparatus and is configured to fulfill the steps of the method of the first aspect of the invention for a receiving apparatus. It is in particular configured to submit a success indication message over all used wireless carriers in case on at least one of the wireless carriers a data packet comprising a content record is successfully received. Said content record in particular relates to payload data, like measurements of a sensor, instructions for operating a robot, alarm messages of a security system, parts of a multimedia file etc. Typically more than one content record is transmitted during one communication connection session.

This aspect of the invention shares the advantages of the first aspect of the invention.

According to a third aspect of the invention it is suggested a user equipment operating in a cellular network for wireless communication having at least one control terminal accessible by the cellular network, the user equipment comprising a transmitting circuitry and a receiving circuitry and a processor, and is operating in a communication connection to the control terminal by means of at least a first and a second wireless carrier, when acting as a transmitting apparatus the transmitting circuitry is configured to send to the control terminal a content record at least as a first data packet over the first wireless carrier and as a second data packet over the second wireless carrier. This embodiment relates to a user equipment comparable to the user equipment of the second aspect of the invention. In this aspect it is acting as transmitting apparatus. In practice the user equipments of the second and the third aspect are preferably identical and configured to act as a transmitting and receiving apparatus, in particular during one communication connection. This aspect of the invention shares the advantages of the first aspect of the invention.

According to the fourth aspect of the invention it is proposed a control terminal accessible by at least one cellular network for wireless communication, having at least one user equipment operating with the cellular network, the control terminal comprising circuitry for maintaining a data connection with at least one cellular network, and is operating in a communication connection to the at least one user equipment by means of at least a first and a second wireless carrier of the cellular network, the control terminal is configured when acting as a transmitting apparatus:
- to attempt to receive from the user equipment a first data packet comprising a content record over the first wireless carrier and a second data packet comprising said content record over the second wireless carrier,
- to send over the first and second wireless carrier each a success indication message to the user equipment indicating whether at least one of the first and second data packet was successfully received.

The control terminal according to the fourth aspect is an apparatus which comprises communication circuitry for being accessible by at least one cellular network, and allowing to maintain at least two carriers over the cellular network to at least one user equipment according to the second or third aspect of the invention.

The control terminal is according to one alternative operating in the internet and having direct or indirect access to the gateway support node (like a GGSN in 2G/3G) of the at least one used cellular network. This access is in the straightforward case particularly achieved through having access by means of a router to the internet.

A direct access to the cellular network through a dedicated gateway node is further part encompassed by this aspect of the invention.

Further it is encompassed by this aspect of the invention that the control terminal is part of the cellular network, in particular the core network. Alternatively according to a preferred embodiment it is proposed that control terminal is a user equipment according to the second aspect of the invention, operating in a cellular network for wireless communication.

The control terminal is preferably the endpoint of the communication connection to a user equipment according to the second and third aspect of the invention, and it is configured to receive content records from the user equipment. Such content records in particular comprise measurements, alarms, responses to instructions send to the user equipment, or instructions received from the user equipment.

The fourth aspect of the invention shares the advantages of the first aspect of the invention.

According to the fifth aspect of the invention it is proposed a cellular network for data transmission between at least one user equipment operating in the cellular network and at least one control terminal accessible from the cellular network, both operating in a communication connection by means of a first and a second wireless carrier, the cellular network comprising at least one radio access network, comprising a control component, at least one of the first and second wireless carriers is operated by the at least one radio access network, with one of the control terminal and the user equipment acting as transmitting apparatus, the other as receiving apparatus, wherein the cellular network is configured to receive an information record from the receiving apparatus, and the control component is further configured to adjust network routing between said transmitting apparatus and said receiving apparatus in case said information record comprises an indication that:
- if the data packet was retrieved first with the wireless carrier operated by another radio access network, or
- if the data packet was retrieved over the wireless carrier provided by said radio access network outside of the predetermined time window, otherwise maintain results of previous network routing.

The cellular network according to this aspect of the invention complements to the cellular network used for the previous aspects of the invention. The cellular network provides at least one of the at least two wireless carriers between the user equipment and the control terminal.

The cellular network is configured to receive from either the user equipment or the control apparatus acting as receiving apparatus an information record after a content record was transmitted from the transmitting apparatus to the receiving apparatus by means of the wireless carrier provided by this cellular network.

This information record informs the cellular network, if the data packed was received at the receiving apparatus through the at least one wireless carrier provided by said cellular network prior to the data packet over the second wireless carrier or not.

Alternatively or additionally the information record further informs if the cellular network, if the data packed was received at the receiving apparatus through the at least one wireless carrier provided by said cellular network during a predetermined time window or not. The predetermined time window preferably relates to the predetermined time window of the first aspect of the invention, which depicts the maximum time a transmitting apparatus waits for a success indication message for a transmitted data packet before the data packet is resent.

The cellular network is configured to handle the received information record in that it considers adjusting the communication environment, at least for the two communication endpoints involved in the respective communication connection.

The cellular network comprises a control component being part of a radio access network of the cellular network. The control component has as one task to control the network routing between access nodes of the cellular network, in particular base nodes or gateway nodes.

If the information record indicates that the data packet transported by the wireless carrier of this cellular network resp. radio access network regularly arrives later than that of the other wireless carrier used by the transmitting apparatus, the control component considers adjusting the network routing. The same consideration is started in case the data packet was retrieved outside of said predetermined time window.

However should it turn out that the radio access network of the control component belongs to a remarkably slower technology standard than the other used wireless carrier, then the control component will probably take no further steps, as the outcome indicated by the information record reflects the expected situation. Preferably for such situations messages are available wherein the cellular network indicates to the transmitting apparatus to suppress sending the information record.

Alternatively the transmitting apparatus is configured to notice such situation by itself and suppresses the transmission of such information record upfront.

As it is shown this invention advantageously solves the depicted problem of providing a high reliable data transmission without a degradation in terms of data throughput. Further the proposed solution is flexible, technology agnostic and therefore can be adapted to many environments.

### BRIEF DESCRIPTION OF THE DRAWINGS

The following description and the annexed drawings set forth in detail certain illustrative aspects and are indicative of but a few of the various ways in which the principles of the embodiments may be employed. Characteristics and advantages of the present invention will appear when reading the following description and annexed drawings of advantageous embodiments given as illustrative but not restrictive examples.
- Fig. 1a: represents an embodiment of a user equipment according to present invention;
- Fig. 2a: represents the architecture of the apparatuses to which the present invention is applied to as an embodiment;
- Fig. 2b: represents another architecture of the apparatuses to which the present invention is applied to as an embodiment;
- Fig. 3: display an exemplary workflow of packet transmissions on a control terminal according to an embodiment of present invention.

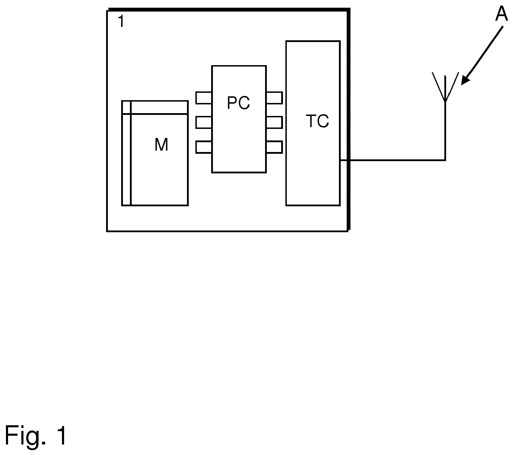

FIG. 1 schematically shows a user equipment 1 of the type to which the present invention is applied as an embodiment. The user equipment 1 is configured to operate in a cellular network by means of at least one base nodes.

The user equipment of this embodiment comprises processor circuitry PC, like a CPU or other types of processors. The processor is configured to run computer programs which are stored in the memory M of the user equipment. The processor is at least dedicated for controlling the transceiver circuitry TC. The transceiver circuitry comprises both receiver circuitry and transmitter circuitry for wireless communication with at least one base node of a cellular network. For this it additionally makes use of the antenna A.

For being capable to maintain a first and a second wireless carrier, the user equipment is in particular configured to maintain two communication connections with two base nodes. Such base nodes may belong to the same radio access network of the same cellular network, to separate radio access networks of the same cellular networks, or even separate cellular networks. For maintaining such at least two wireless carriers, the user equipment may additionally comprise two transceiver circuitries, and/or two antennas. Further additional processing circuitry, in particular for the user equipments main tasks besides setting up a communication connection, may also be available.

The user equipment 1 is in particular part of a robot, a security installation etc. or a controlling equipment of such devices.

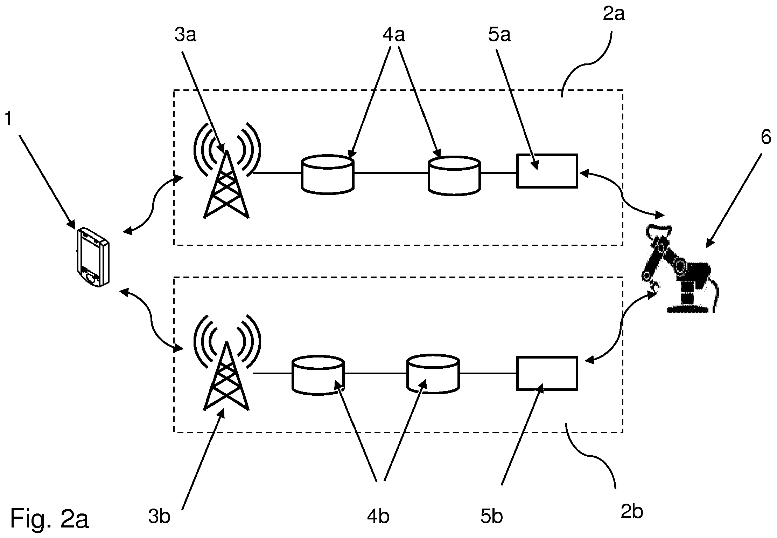

FIG. 2a shows an architecture of the apparatuses according to an embodiment of the invention. The architecture comprises a user equipment 1 camping on two base nodes 3a, 3b of the cellular networks 2a, 2b. In this embodiment the user equipment 1 is operating in two separate cellular networks, whereas it is also foreseen to only operate in two separate radio access networks or on two base nodes.

The visited cellular networks comprise network components 4a, 4b, which are the nodes for routing the messaging between communication endpoints.

Further accessible by the cellular networks 2a, 2b is the control terminal 6, in this embodiment a robot which is supposed to be controlled by the user equipment 1. The control terminal 6 is accessible from the cellular networks 2a, 2b through gateway nodes 5a, 5b. Preferably such gateway nodes are internet gateway nodes like a GGSN.

For setting up a ultra-reliable connection between user equipment 1 and control terminal 6 with low delay times it is according to present invention proposed to set up a redundant connection over two wireless carriers operated by the two cellular networks 2a and 2b. The communication connection is supposed to send all content records as data packets on a higher level, like an IP (internet protocol) package over the two wireless carriers.

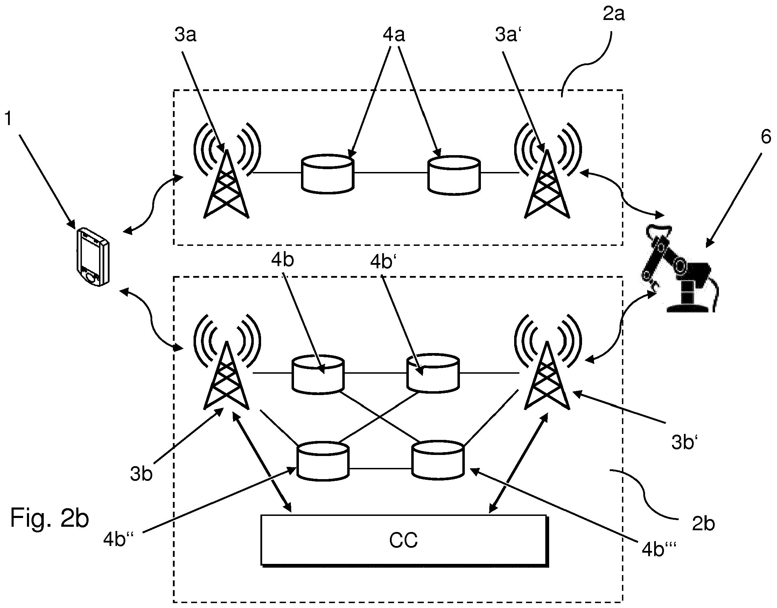

An alternative architecture is shown in FIG. 2b. This architecture does not differ on the side of the user equipment 1. But the control terminal 6 is operating with the cellular network by means of further base nodes 3a', 3b'. Effectively the control terminal 6 is connected to the cellular networks the same way as a user equipment. Preferably the control terminal, like a medical robot, is equipped with a wireless module or a comparable communication equipment for providing wireless connectivity to the medical device.

Consequently the user equipment 1 and the control terminal are exchanging content records by way of redundantly transmitted data packets. In this embodiment both communication endpoints act as transmitting apparatus and as receiving apparatus. This is in particular the case when one of the apparatuses is sending instructions to the other, and the other apparatus responds with feedback messages informing the instructing apparatus about the outcome of the instructions.

One exemplary workflow comprises the user equipment that sends to a medical robot a message for carrying out a certain operation step. The medical robot sends a plurality of content records comprising video frames showing the carried out medical operation. The user equipment 1 needs to have the video frames in approximate realtime. A failure of the connection could harm the whole operation.

In current embodiment it is additionally shown another network component, here the control component CC. This control component receives from the base nodes information elements relating several situations, in particular routing, throughput time etc. When the control terminal 6 receives, in particular repeatedly, data packets via the first wireless carrier using cellular network 2a, but hardly over the second wireless carrier using cellular network 2b, then the control terminal 6 of this exemplifying embodiment is able to send an information element to the base node, indicating the detected situation. This information element is then provided to the control component CC. The control component is preferably situated in the Mobility Management Entity (MME) of the radio access network. In another embodiment, in particular when base nodes 3b and 3b' belong to different radio access networks, the control component is part of the core network of the cellular network 2b.

If the control component CC receives said information element from the base node, preferably not only once, then it has means to reconfigure routing through the cellular network 2b. Instead of a routing from base node 3b via network component 4b and 4b' to base node 3b', another routing via network component 4b" and 4b'" turns out to be more performant. This might be the case due to overload of a network component or some technical deficiencies. Hence the routing is re-configured for the data packets to come during the imminent data connection between user equipment 1 and control terminal 6. With that exemplary embodiment the cellular network is informed about performance issues and can take measures to overcome such issues. This reduces the delay time over one of the available carriers for the highly reliable and low latency connection between the user equipment 1 and the control terminal 6. In case of problems with the other - by now faster-wireless carrier then the automatic immediate fall-back according to the inventive method to the second wireless carrier would not slow down the connection too much. Generally such behaviour would also apply, when the control terminal would not be attached wirelessly as shown in Fig. 2a.

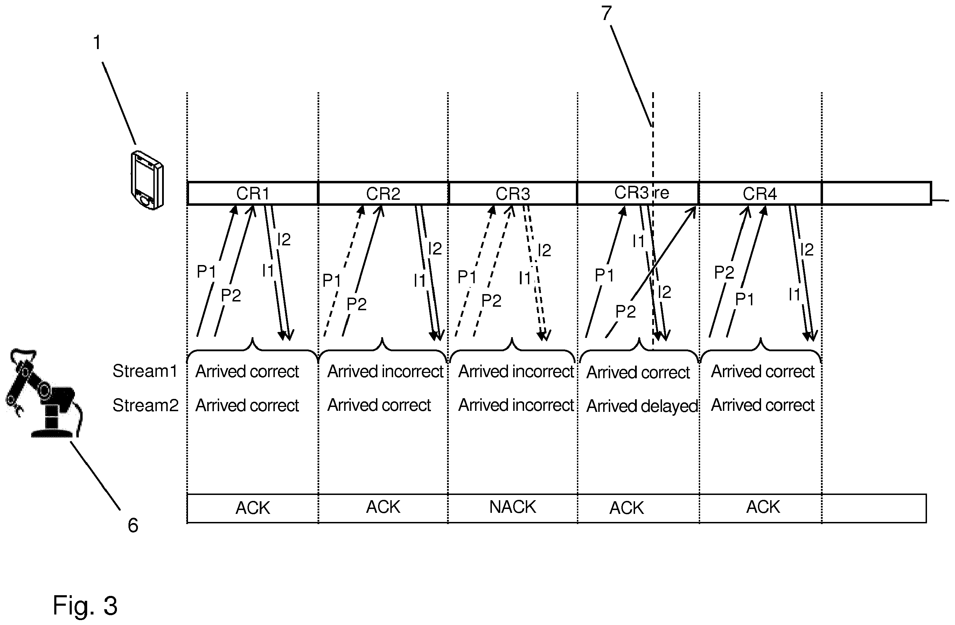

How the high reliable and low latency data packet transmission is assured is shown in FIG. 3. Here along the time bar it is shown how content records are transmitted by the control terminal 6 to the user equipment 1, in particular the mentioned video frames. The control terminal 6 is for a queue of content records CR1-4 the transmitting apparatus, the user equipment 1 is the receiving apparatus.

The communication connection via the first and the second wireless carrier is established, and the data transmission is about to start.

For the first content record CR1 a data packet is sent each via the first wireless carrier, the data packet P1 indicated by a solid arrow and a second data packet P2 via the second wireless carrier, indicated by an hollow arrow. The data transmission is carried out in parallel or with a slight time shift, depending on the capabilities of the transmitting apparatus.

The user equipment 1 as receiving apparatus receives both data packets successfully and in response sends via both wireless carriers a first success indication message I1 and a second success indication message I2, in effect an acknowledgement (ACK) of the data transmission. The arrow design correspond to the arrow design of the data packets. In effect both packets are arrived correctly, hence the transmitting apparatus is informed that the content record CR1 is successfully transmitted and can therefore move on to send the next content record CR2 in the queue.

The procedure for the transmitting apparatus is identical. However in this case the first data packet P1 is not received decodable by the receiving apparatus, which is indicated by the dashed arrow. This situation can mean that the receiving apparatus receives a data packet but the checksum does not fit to the received content.

The second data packet P2 is yet well received at the receiving apparatus and is successfully decodable. As a result, the user equipment 1 as receiving apparatus sends to the transmitting apparatus via both wireless carriers a first success indication message I1 and a second success indication message I2. Both success indication messages comprise the same content: the data packet is well received.

This is remarkable as by now it is not known that for an unsuccessful transmission of a data packet a positive success indication message (ACK) is transmitted, due to another data packet transmitted over another communication channel.

That both success indication messages comprise the same content leads to the situation that the transmission over both wireless carriers remain synchronised even when via one wireless carrier the transmission was not successful.

By receiving success indication messages with an ACK, the transmitting apparatus moves forward to the next content record CR3.

In this case the wireless conditions have degrades so much that both data packets P1, P2 over both wireless carriers are not successfully received at the user equipment 1. In effect the user equipment responds with a success indication message comprising a non-acknowledgment (NACK), indicated by the as well dashed arrows.

This is the only situation where a NACK is sent, and needs to be handled as well. Hence the transmitting apparatus continues after reception of the negative success indication messages I1, I2 with a resending of content record CR3 via data packets P1 and P2. This would also be the case if the success indication messages I1 and I2 are not received within a predetermined time window at the transmitting apparatus.

After resending the data packet P1 via the first wireless carrier is successfully received at the user equipment. Alas, the second data packet P2 requires more time. This might be due to the case that an underlying retry mechanism, like a HARQ, when the second wireless carrier is using a LTE connection, is still running and tries to transmit the data packet repeatedly.

Nevertheless the predetermined time window 7 for reception of a data packet indicated by a dashed line is already passed, hence even though the data packet P2 could eventually be successfully transmitted, it is outside of the reception window and therefore considered as not successfully transmitted. Due to the fact that the first data packet P1 of the resent content record CR3 is well received way earlier, the receiving apparatus is supposed to send success indication messages I1, I2 indicating an ACK to the transmitting apparatus.

According to the shown embodiment these success indication messages are preferably sent as soon as one of the data packets is successfully received. As it can be seen the success indication messages I1, I2 are already transmitted before the predetermined time window 7 has expired.

This could in an advantageously embodiment have the effect for the transmitting apparatus that it cancels on lower layers of the wireless carriers all attempts to transmit the second data packet P2 and instead move on to transmit the next content record CR4. This would have the effect that the time for transmitting a content record could be further squeezed, in relationship to fastest time for the successful transmission of the content record via either of the two wireless carriers.

Finally the transmission of the next content record CR4 is carried out, where both data packets P1, P2 are well received at the user equipment 1, and therefore the two success indication messages I1, I2 via the two wireless carriers both indicate a successful transmission of the content record.

This example shows that the redundancy for achieving a reliable data transmission does have no negative impact on the data throughput. Due to the fact that the success indication messages in each case both indicate the same information in relation to the successful reception of the transmitted data packets, a synchronisation between the data streams via both wireless carriers is achieved without remarkable overhead. Finally the data transmission is in particular in each case as fast as the fastest wireless carrier for each content record.

In the above detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the scope of the invention. In addition, it is to be understood that the location or arrangement of individual elements within each disclosed embodiment may be modified without departing from the scope of the invention. The above detailed description is, therefore, not to be taken in a limiting sense, and the scope of the present invention is defined only by the appended claims, appropriately interpreted, along with the full range of equivalents to which the claims are entitled.

## Claims

1. Method for data transmission between a user equipment (1) operating in a cellular network (2) for wireless communication, and a control terminal (6) accessible from the cellular network,
wherein the user equipment operates in a communication connection to the control terminal by means of at least a first and a second wireless carrier, with one of the control terminal and the user equipment acting as transmitting apparatus, the other as receiving apparatus, wherein the transmitting apparatus is sending a content record (CR) at least as at least a first data packet (P1) over the first wireless carrier and as at least a second data packet (P2) over the second wireless carrier,
the method comprising the steps for the receiving apparatus of:
- attempting to receive the first data packet over the first wireless carrier and the second data packet over the second wireless carrier,
- sending over the first and second wireless carrier each a success indication message (I1, I2) to the transmitting apparatus indicating whether at least one of the first and second data packet was successfully received.

2. Method for data transmission according to claim 1,
wherein the at least first and second wireless carriers are established by at least one of:
- two base nodes (3a, 3b) supporting same technology standard,
- two base nodes (3a, 3b) supporting two different technology standards, or
- two base nodes (3a, 3b) from two different cellular network operators.

3. Method for data transmission according to at least one of the claims 1 or 2, comprising the steps for the transmitting apparatus of:
- continuing sending a second content record (CR), in case of receiving a success indication message (I1, I2) from the receiving apparatus over at least one of the first and second wireless carrier.

4. Method for data transmission according to claim 3,
comprising further the step of resending the content record (CR) in case no success indication message (I1, I2) was received within a predetermined time window (7).

5. Method for data transmission according to at least one of the claims 1 to 4, wherein the step of sending the success indication message (I1, I2) is carried out as soon as one of the first and second data packet was successfully received.

6. Method for data transmission according to at least one of the claims 1 to 5, wherein the success indication message (I1, I2) comprises an information element relating to which of the at least one out of the group of the first wireless carrier and the second wireless carrier caused the sending of the success indication message (I1, I2).

7. Method for data transmission according to at least one of the claims 1 to 6, further comprising for the receiving apparatus the step of sending an information record to the cellular network (2) of at least one of the first or second wireless carrier, the information record comprising an indication indicating at least one of out of the group of:
- if the data packet (P1, P2) was retrieved first with the respective wireless carrier, or
- if the data packet (P1, P2) was retrieved during the predetermined time window.

8. User equipment (1) operating in at least one cellular network (2) for wireless communication comprising a connection to at least one control terminal (6), the user equipment comprising a transmitting circuitry and a receiving circuitry, and is operating in a communication connection to the control terminal by means of at least a first and a second wireless carrier,
when the user equipment is acting as a receiving apparatus the receiving circuitry is configured to attempt to receive from the control terminal a first data packet (P1) comprising a content record (CR) over the first wireless carrier and a second data packet (P2) comprising said content record over the second wireless carrier,
and the transmitting circuitry is configured to send over the first and second wireless carrier each a success indication message (I1, I2) to the control terminal indicating whether at least one of the first and second data packet was successfully received.

9. User equipment (1) according to claim 8,
wherein the at least first and second wireless carriers are established by at least one of:
- two base nodes (3a, 3b) supporting same technology standard,
- two base nodes (3a, 3b) supporting two different technology standards, or
- two base nodes (3a, 3b) from two different cellular network operators.

10. User equipment (1) operating in a cellular network (2) for wireless communication having at least one control terminal (6) accessible by the cellular network,
the user equipment comprising a transmitting circuitry and a receiving circuitry and a processor (PC),
and is operating in a communication connection to the control terminal by means of at least a first and a second wireless carrier,
when acting as a transmitting apparatus the transmitting circuitry is configured to send to the control terminal (6) a content record (CR1) at least as a first data packet (P1) over the first wireless carrier and as a second data packet (P2) over the second wireless carrier.

11. User equipment according to claim 10,
wherein further the processor (PC) is configured to instruct the transmitting circuitry to continue sending a second content record (CR2), in case of receiving by means of the receiving circuitry a success indication (I1, I2) message from the control terminal (6) over at least one of the first and second wireless carrier.

12. User equipment according to at least one of the claim 10 or 11,
wherein further the processor (PC) is configured to instruct the transmitting circuitry to resend the content record (CR1) in case no success indication message was received by means of the receiving circuitry within a predetermined time window (7).

13. Control terminal (6) accessible by at least one cellular network (2) for wireless communication, having at least one user equipment (1) operating with the cellular network, the control terminal comprising circuitry for maintaining a data connection with at least one cellular network, and is operating in a communication connection to the at least one user equipment by means of at least a first and a second wireless carrier of the cellular network,
the control terminal is configured when acting as a transmitting apparatus:
- to attempt to receive from the user equipment a first data packet (P1) comprising a content record (CR1) over the first wireless carrier and a second data packet (P2) comprising said content record over the second wireless carrier,
- to send over the first and second wireless carrier each a success indication (I1, I2) message to the user equipment indicating whether at least one of the first and second data packet was successfully received.

14. Control terminal (6) according to claim 13,
wherein the control terminal is a user equipment (6) according to claim 8 operating in a cellular network (2) for wireless communication.

15. Cellular network (2) for data transmission between at least one user equipment (1) operating in the cellular network and at least one control terminal (6) accessible from the cellular network, both operating in a communication connection by means of a first and a second wireless carrier,
the cellular network comprising at least one radio access network, comprising a control component (CC),
at least one of the first and second wireless carriers is operated by the at least one radio access network, with one of the control terminal and the user equipment acting as transmitting apparatus, the other as receiving apparatus, wherein the cellular network is configured to receive an information record from the receiving apparatus, and
the control component is further configured to adjust network routing between said transmitting apparatus and said receiving apparatus in case said information record comprises an indication that:
- if the data packet was retrieved first with the wireless carrier operated by another radio access network, or
- if the data packet was retrieved over the wireless carrier provided by said radio access network outside of a predetermined time window (7),
otherwise maintain results of previous network routing.
